# FASCICULE DE BREVET EUROPEEN

(11) **EP 1 933 054 B1**
(45) Date de publication et mention de la délivrance du brevet: **20.02.2013**
(21) Numéro de dépôt: 07122234.3
(22) Date de dépôt: 04.12.2007
(51) Int. Cl.: F16D 65/097

(54) **Frein à disque comportant des moyens de rappel élastique du patin de frein dans sa position de repos**
Scheibenbremse, die mit elastischen Rückholvorrichtungen für den Bremsbelagträger in seiner Ruheposition ausgestattet ist
Disc brake comprising elastic means for returning the brake shoe to its disengaged position

(30) Priorité: 15.12.2006 FR 0611054
(43) Date de publication de la demande: 18.06.2008
(73) Titulaire: ROBERT BOSCH GMBH, 70442 Stuttgart (DE)
(72) Inventeur: Picot, Pascal, 77170 BRIE CONTE ROBERT (FR); Hurwic, Aleksander, 75020 PARIS (FR); Beylerian, Bruno, 95380 LOUVRES (FR)

(56) Documents cités:
- WO-A-2005/012753
- US-A- 4 245 723
- US-A- 5 687 817
- US-A1- 2004 144 602

## Description

L'invention concerne un frein à disque de véhicule automobile qui comporte au moins un patin de frein qui est monté coulissant axialement dans au moins une glissière formée par un ressort à lames.

L'invention concerne plus particulièrement un frein à disque de véhicule automobile qui comporte :
- au moins un patin de frein qui est monté coulissant par rapport à un disque de frein selon un axe de coulissement d'orientation axiale dans au moins une glissière entre une position avant de freinage dans laquelle une face de friction du patin de frein est susceptible d'être serrée contre une face arrière du disque, et une position arrière de repos dans laquelle la face de friction du patin de frein est éloignée de la face arrière du disque ;
- un étrier qui comporte au moins un élément de serrage du patin de frein qui est susceptible de solliciter axialement le patin de frein vers sa position de freinage ;
du type dans lequel la glissière qui est fixée à une chape fixe, comporte une première aile déformable élastiquement qui comporte une face de guidage comportant une zone de contact avec une oreille de guidage du patin de frein et qui exerce un effort élastique constant de pincement de manière à pincer radialement l'oreille de guidage contre une zone de contact d'une face opposée de la glissière.

Il est connu de proposer des freins à disque du type de celui décrit précédemment, dans lesquels chaque glissière est réalisée par un ressort à lame plié qui est fixé à la chape d'un étrier associé. Ces freins à disque sont plus silencieux que les freins conventionnels. En effet, les ressorts à lames sont destinés à réduire les vibrations qui existent entre le patin de frein et la chape en permettant une certaine liberté de déplacement transversal et radial du patin de frein par rapport à la chape.

Les patins de frein sont généralement montés coulissants librement dans les glissières associées. Ainsi, ils sont sollicités contre le disque par un élément de serrage de l'étrier, et ils sont repoussés en sens inverse vers leur position de repos par le frottement du disque lorsque l'élément de serrage est revenu dans sa position de repos.

Cependant, il arrive que le patin reste collé contre le disque alors que l'élément de serrage est revenu dans sa position de repos, notamment lorsque le disque tourne à vitesse réduite. Cela provoque d'une part une usure inutile du patin, et d'autre part une surconsommation d'énergie de la part du véhicule automobile pour contrer la force de frottement du patin. En outre, le patin frottant librement contre le disque entre en vibration ce qui produit un bruit désagréable aussi appelé "moan".

Pour résoudre ce problème, l'invention propose un frein à disque tel que revendiqué dans les revendications.

Selon d'autres caractéristiques de l'invention :
- la zone de contact de la deuxième face de guidage est parallèle à la direction de coulissement axial du patin de frein ;
- la zone de contact de la première aile est formée par l'arête axiale d'une nervure qui est inclinée radialement par rapport à la direction axiale ;
- le patin de frein est monté coulissant dans une chape fixe, l'élément de serrage étant constitué d'un piston qui coulisse axialement par rapport à la chape ;
- le patin de frein est monté coulissant dans une chape fixe et l'étrier est monté coulissant axialement sur la chape, le patin de frein étant agencé en regard d'un nez d'étrier ;

D'autres caractéristiques et avantages apparaîtront au cours de la lecture de la description détaillée qui va suivre pour la compréhension de laquelle on se reportera aux dessins annexés parmi lesquels :
- la figure 1 est une vue en perspective éclatée qui représente un frein à disque réalisé selon les enseignements de l'invention ;
- la figure 2 est une vue de détail à plus grande échelle en perspective qui représente une glissière du frein à disque de la figure 1 réalisée selon les enseignements de l'invention ;
- la figure 3 est une vue de face à plus grande échelle qui représente la glissière de la figure 2 agencée sur la chape du frein à disque ;
- la figure 4 est une vue de coté qui représente schématiquement une oreille du patin coulissant dans la glissière associée entre sa position de repos et sa position de serrage.

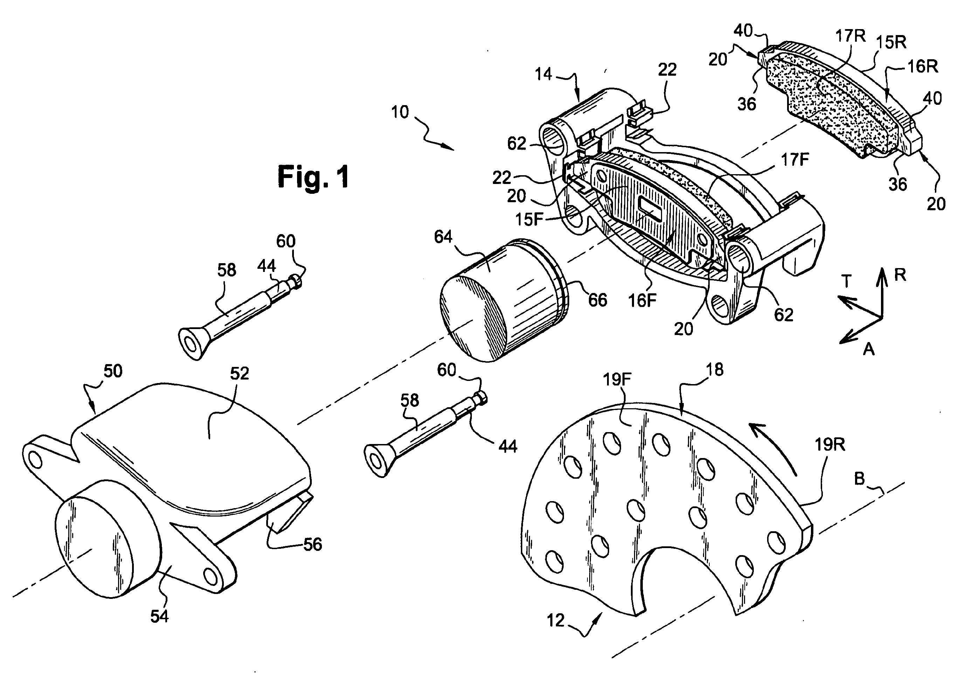

Pour la suite de la description, on adoptera de manière non limitative des orientations axiale, radiale et transversale qui sont indiquées par le trièdre "A, R, T" de la figure 1. L'orientation axiale est dirigée d'arrière en avant, l'orientation radiale est dirigée de bas en haut selon le rayon du disque de frein associé et l'orientation transversale est dirigée d'amont en aval selon le sens de rotation du disque de frein associé.

Pour la suite de la description, des éléments identiques, analogues ou similaires seront désignés par des mêmes numéros de référence.

On a représenté à la figure 1 un frein à disque 10 de véhicule automobile.

De manière connue, le véhicule comporte un disque 12 qui est monté tournant autour d'un axe "B" d'orientation axiale. Le disque 12 est lié en rotation à une roue (non représentée) d'un véhicule qui lui est coaxiale.

Le frein à disque 10 comporte une chape 14 fixe dans laquelle deux patins de frein arrière 16R et avant 16F sont montés coulissants axialement. La chape fixe 14 est destinée à chevaucher un bord périphérique 18 du disque 12.

Chaque patin de frein 16R, 16F est plus particulièrement monté coulissant entre une position de repos dans laquelle une face de friction 17R, 17F du patin 16R, 16F est éloignée d'une face associée en vis-à-vis du disque 12 et une position de freinage dans laquelle la face de friction 17R, 17F du patin 16R, 16F est appliquée contre la face associée 19R, 19F du disque 12.

A cet effet, chaque patin de frein 16R, 16F comporte deux oreilles 20 d'extrémité transversale opposées qui sont montées coulissantes dans deux glissières opposées 22 de la chape fixe 14. La chape 14 porte ainsi quatre glissières 22 similaires.

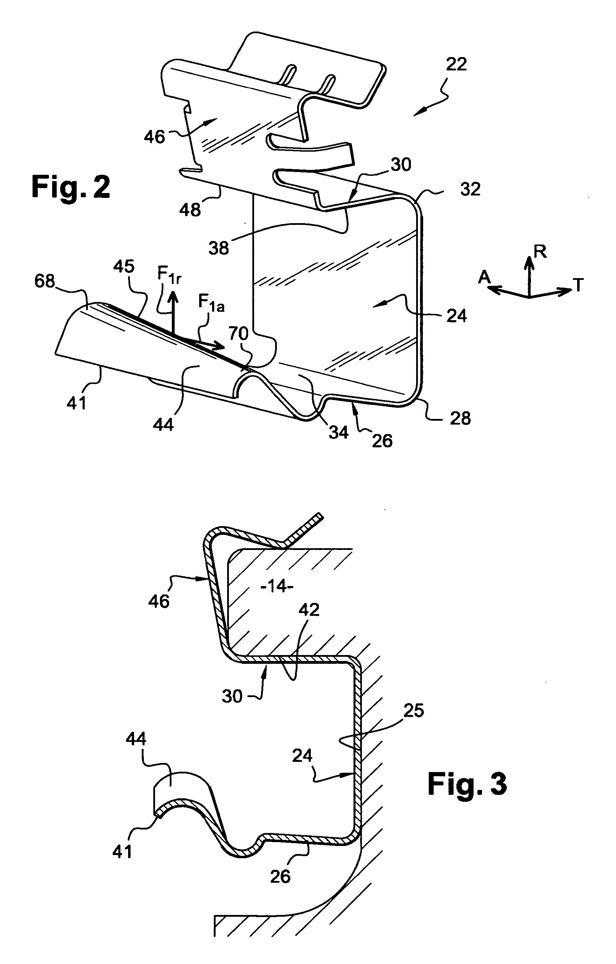

Comme illustré à la figure 3, de manière connue, chaque glissière 22 est ici formée par une lame de ressort qui est pliée de manière à former une gorge en forme de "U" ouverte transversalement de manière à épouser la forme de l'oreille 20 associée du patin de frein 16R, 16F.

On a représenté plus en détail à la figure 2 une des glissières 22. La glissière 22 comporte plus particulièrement une âme 24 d'orientation sensiblement radiale qui est destinée à être agencée à proximité d'une face d'orientation sensiblement radiale 25 associée de la chape 14, et qui forme le fond de la glissière 22. Une première aile inférieure axiale de guidage 26 s'étend transversalement depuis un bord axial d'extrémité inférieure 28 de l'âme 24 jusqu'à un bord axial d'extrémité transversale libre 41.

Une deuxième aile supérieure axiale de guidage 30 s'étend transversalement depuis un bord axial d'extrémité supérieure 32 de l'âme 24 jusqu'à un bord axial d'extrémité transversale 48.

Les deux ailes de guidage 26, 30 forment les branches sensiblement parallèles de la gorge en forme de "U".

La première aile inférieure de guidage 26 comporte une face supérieure 34 qui est destinée à recevoir en coulissement axial un bord inférieur de l'oreille 20. De même, la deuxième aile supérieure de guidage 30 comporte une face inférieure 38 qui est destinée à recevoir en coulissement axial un bord supérieur de l'oreille 20.

Comme représenté à la figure 3, la deuxième aile supérieure de guidage 30 est destinée à être plaquée contre une face transversale axiale 42 de la chape 14, tandis que la deuxième aile inférieure de guidage 26 est agencée dans un espace libre de la chape 14 de manière que son extrémité libre 41 soit libre d'être déplacée radialement lorsque la première aile inférieure de guidage 26 fléchit élastiquement autour d'une position stable.

De manière connue, la première aile inférieure de guidage 26 comporte une nervure axiale 44 qui est agencée à proximité du bord libre 41. La nervure axiale 44 est formée par un plissement axial qui s'étend radialement vers le haut et qui comporte une arête axiale 45 sensiblement arrondie.

L'oreille 20 est plus particulièrement destinée à être en contact avec l'arête axiale 45 qui forme ainsi une zone de contact 45 avec l'oreille 20, tandis que la zone de contact entre l'oreille 20 et la deuxième aile de guidage 30 s'étend sensiblement sur toute la largeur transversale de la surface de la face interne de guidage 38 de la deuxième aile supérieure de guidage 30.

La première aile inférieure de guidage 26 est déformable élastiquement en flexion. Le montage de l'oreille 20 dans la glissière 22 est précontraint de manière que la première aile inférieure de guidage 26 exerce sur l'oreille 20 un effort de pincement actif "F1" sensiblement radial vers le haut afin de pincer de manière constante l'oreille 20 contre la face interne de guidage 38 de la deuxième aile supérieure de guidage 30. La face interne de guidage 38 de la deuxième aile supérieure de guidage 30 applique ainsi un effort de pincement réactif "F2" sensiblement radial vers le bas sur l'oreille 20. La somme de l'effort de pincement actif "F1" et de l'effort de pincement réactif "F2" sera par la suite appelée "effort total de pincement" "Ftot".

La glissière 22 est fixée à la chape 14 par des moyens de fixation 46 par emboîtement de formes complémentaires qui sont portés par le bord libre 48 de la deuxième aile supérieure du guidage 30. De tels moyens de fixation sont connus de l'état de la technique. Un exemple de ces moyens parmi d'autres est divulgué dans le document WO-A-0.131.223.

Comme illustré à la figure 1, un étrier de frein 50 est susceptible de serrer axialement chaque patin de frein arrière 16R et avant 16F de part et d'autre des faces 19R, 19F opposées arrière et avant du disque 12.

De manière connue, l'étrier 50 comporte une voûte 52 qui s'étend axialement au-dessus de la chape 14 en la recouvrant. Deux parois avant 54 et arrière 56 opposées s'étendent radialement depuis les bords d'extrémité arrière et avant de la voûte 52 de manière que la face avant de la paroi arrière 56 soit agencée en regard du patin de frein arrière 16R, et de manière que la face arrière de la paroi avant 54 soit agencée en regard du patin de frein avant 16F.

La paroi arrière 56 de l'étrier 50 sera appelée par la suite "nez d'étrier 56".

L'étrier 50 est monté coulissant axialement par rapport à la chape fixe 14 entre une première position arrière de repos et une deuxième position avant de serrage. A cet effet, l'étrier 50 comporte un premier et un second axes de guidage 58, aussi appelés "colonnettes", parallèles d'orientation axiale dont les extrémités libres arrière 60 sont respectivement reçues en coulissement axial avec jeu radial dans un premier et un deuxième alésages 62 axiaux associés de la chape 14.

De manière connue, la paroi avant 54 de l'étrier 50 comporte au moins un piston axial 64 dont une extrémité d'appui arrière 66 est susceptible de solliciter une face d'appui du patin de frein avant 16F pour serrer une face de friction 17F opposée dudit patin de frein avant 16F contre la face associée avant 19F du disque 12 lors d'un freinage.

Par réaction, l'étrier 50 coulisse axialement vers sa position avant de freinage par rapport à la chape 14 de façon que le nez d'étrier 56 sollicite une face d'appui du patin de frein arrière 16R pour serrer une face de friction 17R opposée dudit patin de frein arrière 16R contre la face avant 19R du disque 12.

Le piston axial 64 et le nez d'étrier 56 constituent ainsi des éléments de serrage des patins de frein 16R, 16F contre le disque 12.

Lorsque les patins de frein 16R, 16F sont ainsi serrés contre les faces opposées 19R, 19F du disque 12, ils coopèrent par friction avec le disque 12 pour ralentir ou arrêter sa rotation.

Selon les enseignements de l'invention, les glissières 22 d'au moins l'un des patins de frein 16R, 16F comportent des moyens pour rappeler élastiquement ledit patin de frein 16R, 16F vers sa position de repos de manière à être maintenu constamment en contact avec l'élément de serrage associé, c'est-à-dire contre le nez d'étrier 56 pour le patin de frein arrière 16R, ou contre le piston 64 pour le patin de frein avant 16F.

Par la suite, on décrira l'invention en référence au patin de frein arrière 16R, mais l'invention est aussi applicable au patin de frein avant 16F en inversant les adjectifs "avant" et "arrière".

On a représenté plus en détail à la figure 2 une des glissières 22 associée au patin de frein arrière 16R réalisée selon les enseignements de l'invention. La deuxième glissière 22 associée au patin de frein arrière 16R est identique par symétrie axiale radiale.

Les zones de contact des faces internes de guidage 34, 38 des ailes de guidage 26, 30 avec l'oreille 20 sont inclinées radialement l'une par rapport à l'autre selon la direction de coulissement axial du patin de frein arrière 16R de manière que l'effort total de pincement "Ftot" exercé par les ailes de guidage 26, 30 sur l'oreille 20 comporte une composante axiale "Fa" dirigée vers l'arrière destinée à rappeler élastiquement le patin de frein arrière 16R vers sa position de repos.

Plus particulièrement, la face interne de guidage 38 de la deuxième aile supérieure de guidage 30 est ici parallèle à la direction de coulissement axial du patin de frein arrière 16R de manière que l'effort de pincement réactif "F2" en réaction à l'effort de pincement actif "F1" exercé par l'arête axiale 45 de la face interne de guidage 34 de la première aile inférieure de guidage 26 sur l'oreille 20 soit sensiblement radial et dirigé vers le bas.

L'arête axiale 45 de la nervure 44 de la première aile inférieure de guidage 26 est réalisée de manière inclinée radialement par rapport à la direction axiale. Ainsi, par rapport à une glissière connue de l'état de la technique, la première aile inférieure de guidage 26 apparaît comme si elle avait subi un mouvement de torsion autour d'un axe transversal. La distance radiale entre l'extrémité avant 68 de la nervure 44 et la face interne de guidage 38 de la deuxième aile supérieure de guidage 30 est inférieure à la distance radiale entre l'extrémité arrière 70 de la nervure 44 et la face interne de guidage 38 de la deuxième aile supérieure de guidage 30.

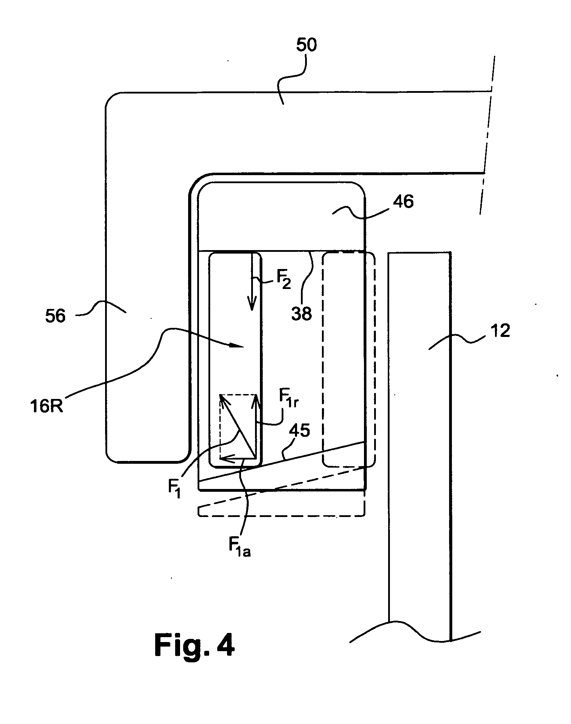

Ainsi, comme l'illustre la figure 4, l'effort de pincement actif "F1" qui est appliqué par la première aile inférieure de guidage 26 sur l'oreille 20 est orthogonal à la nervure 44. Cet effort de pincement actif "F1" a donc une première composante de pincement radiale "F1r" qui est dirigée vers le haut de manière à plaquer l'oreille 20 contre la deuxième aile supérieure de guidage 30, et une deuxième composante axiale de rappel "F1a" qui est dirigée vers l'arrière de manière à plaquer le patin de frein arrière 16R contre le nez d'étrier 56. La composante radiale "F1r" est de même intensité que l'effort de pincement réactif "F2", mais de signe opposé. Ainsi, l'effort total de pincement "Ftot" est égal à la deuxième composante axiale "F1a" de l'effort de pincement actif "F1".

Lorsque le patin de frein arrière 16R est dans sa position de repos, il est plaqué contre le nez d'étrier 56 par la composante axiale de l'effort de pincement actif "F1" qui est représentée en trait fort à la figure 4.

Lorsque l'étrier 50 est commandé vers sa position de serrage, le nez d'étrier 56 pousse le patin de frein arrière 16R vers sa position avant de freinage. La distance radiale entre l'arête axiale 45 de la face interne de guidage 34 de la première aile inférieure de guidage 26 et la face interne de guidage 38 de la deuxième aile supérieure de guidage 30 diminuant proportionnellement au déplacement axial du patin de frein arrière 16R vers l'avant, la première aile inférieure de guidage 26 est écartée élastiquement vers le bas par l'oreille 20 du patin de frein arrière 16R, comme représenté en traits pointillés à la figure 4.

Cette déformation élastique provoque une augmentation de l'intensité de l'effort de pincement actif "F1", et notamment de la composante axiale de rappel "F1a". Ainsi, plus le patin de frein arrière 16R se rapproche de sa position de freinage, plus la composante axiale de rappel plaque le patin de frein arrière 16R contre le nez d'étrier 56.

La position axiale du patin de frein arrière 16R est donc parfaitement maîtrisée, et lorsque l'étrier 50 est rappelé vers sa position de repos, même à faible vitesse de rotation du disque 12, le patin de frein arrière 16R est immédiatement décollé de la face associée 19R du disque de frein 12.

La glissière 22 réalisée selon les enseignements de l'invention permet donc d'éviter que le patin de frein arrière 16R ne reste au contact de la face associée 19R du disque de frein 12 lorsque l'étrier 50 ne le serre plus, tout en conservant une liberté de mouvement axial par rapport à l'étrier 50. Le frein à disque 10 n'émet donc plus de bruit dit "moan" lorsque le disque de frein 12 associé tourne à vitesse réduite.

De plus, la face de friction 17R du patin de frein arrière 16R n'est plus usée inutilement lorsque l'étrier 50 n'est plus dans sa position de serrage. Cela permet aussi au véhicule d'économiser du carburant.

Avantageusement, la glissière 22 est réalisée en une seule pièce par pliage d'une feuille d'acier ayant des propriétés élastiques appropriées. Ainsi, les moyens de rappel élastique sont très simples à réaliser et leur fabrication n'entraîne pas de surcoût par rapport à une glissière connue de l'état de la technique.

Comme expliqué précédemment, une telle glissière 22 avec de tels moyens de rappel élastiques peut être associée au patin de frein avant 16F. Le patin de frein avant 16F est alors maintenu en permanence au contact du piston 64.

Selon une variante non représentée de l'invention, la face interne de guidage 38 de la deuxième aile supérieure de guidage 30 peut être inclinée radialement par rapport à la direction de coulissement axial de manière que l'effort de pincement réactif "F2" comporte une composante axiale dirigée vers l'arrière.

De manière générale, il est nécessaire qu'au moins la zone de contact avec l'oreille 20 de l'une ou des deux faces internes de guidage 34, 38 soient inclinées radialement par rapport à la direction de coulissement axial de manière que, quelle que soit la position axiale du patin de frein 16R, 16F, l'effort total de pincement "Ftot" comporte une composante axiale qui soit dirigée vers l'arrière pour rappeler élastiquement le patin de frein 16R, 16F vers sa position de repos.

L'invention a été décrite en référence à un frein à disque 10 du type dit "à étrier flottant", mais elle est aussi applicable à des freins à disque du type à étrier fixe dans lequel chaque patin de frein 16R, 16F est appliqué contre la face associée 19R, 19F du disque de frein 12 par un piston associé.

## Revendications

1. Frein à disque (10) de véhicule automobile du type dans lequel au moins une glissière (22) formée par un ressort à lames est fixée à une chape (14) par des moyens de fixation (46) par emboîtement de formes complémentaires qui sont portés par un bord libre (48) ; ledit frein à disque comporte :
- au moins un patin de frein (16R, 16F) qui est monté coulissant par rapport à un disque de frein (12) selon un axe de coulissement d'orientation axiale dans au moins une glissière (22) entre une position avant de freinage dans laquelle une face de friction (17R, 17F) du patin de frein (16R, 16F) est susceptible d'être serrée contre une face arrière (19R, 19F) du disque (12), et une position arrière de repos dans laquelle la face de friction (17R, 17F) du patin de frein (16R, 16F) est éloignée de la face arrière (19R, 19F) du disque (12) ;
- un étrier (50) qui comporte au moins un élément de serrage (56, 64) du patin de frein (16R, 16F) qui est susceptible de solliciter axialement le patin de frein (16R, 16F) vers sa position de freinage ; ladite au moins une glissière comportant :
une âme (24) d'orientation sensiblement radiale qui est destinée à être agencée à proximité d'une face d'orientation sensiblement radiale (25) associée de la chape (14), et qui forme le fond de la glissière (22) ; une première aile, inférieure, axiale, de guidage (26) s'étendant transversalement depuis un bord axial d'extrémité inférieure (28) de l'âme (24) jusqu'à un bord axial d'extrémité transversale libre (41) ;
la première aile inférieure de guidage (26) comportant une nervure axiale (44) qui est agencée à proximité du bord libre (41) ; la nervure axiale (44) étant formée par un plissement axial qui s'étend radialement vers le haut et qui comporte une arête axiale (45) sensiblement arrondie qui exerce un effort élastique constant de pincement (F1) de manière à pincer radialement l'oreille de guidage (20) contre une zone de contact d'une deuxième face de guidage (38) de la glissière (22)
une deuxième aile, supérieure, axiale, de guidage (30) s'étendant transversalement depuis un bord axial d'extrémité supérieure (32) de l'âme (24) jusqu'à un bord axial d'extrémité transversale (48) ;
**caractérisé en ce que** l'arête axiale (45) de la nervure (44) de la première aile inférieure de guidage (26) est réalisée de manière inclinée radialement par rapport à la direction axiale de coulissement du patin (16R) de manière à ce que l'effort total de pincement (Ftot) exercé par l'aile de guidage (26) sur l'oreille (20) ait une composante (F1a) dirigée vers l'arrière.

2. Frein à disque (10) selon la revendication précédente, **caractérisé en ce que** la zone de contact de la deuxième face de guidage (38) est parallèle à la direction de coulissement axial du patin de frein (16R, 16F).

3. Frein à disque (10) selon la revendication précédente, **caractérisé en ce que** la zone de contact de la première aile inférieure de guidage. (26) est formée par l'arête axiale (45) de la nervure (44) qui est inclinée radialement par rapport à la direction axiale.

4. Frein à disque (10) selon l'une quelconque des revendications précédentes, **caractérisé en ce que** le patin de frein (16F) est monté coulissant dans la chape fixe (14), et **en ce que** l'élément de serrage est constitué d'un piston (64) qui coulisse axialement par rapport à la chape (14).

5. Frein à disque (10) selon l'une quelconque des revendications précédentes, **caractérisé en ce que** le patin de frein (16R) est monté coulissant dans une chape fixe (14) et **en ce que** l'étrier (50) est monté coulissant axialement sur la chape (14), le patin de frein (16R) étant agencé en regard d'un nez d'étrier (56).

## Claims

1. Disk brake (10) of a motor vehicle of the type in which at least one slider (22) formed by a leaf spring is fastened to a carrier (14) by means (46) for fastening by fitting together matching shapes that are supported by a free edge (48); the said disk brake comprises:
- at least one brake pad (16R, 16F) which is slidingly mounted relative to a brake disk (12) along a sliding axis of axial orientation in at least one slider (22) between a front braking position in which a friction face (17R, 17F) of the brake bad (16R, 16F) is capable of being clamped against a rear face (19R, 19F) of the disk (12) and a rear, rest position in which the friction face (17R, 17F) of the brake pad (16R, 16F) is at a distance from the rear face (19R, 19F) of the disk (12);
- a calliper (50) which comprises at least one clamping element (56, 64) of the brake pad (16R, 16F) which is capable of axially urging the brake pad (16R, 16F) towards its braking position; the said at least one slider comprising:
a core (24) of substantially radial orientation which is designed to be arranged close to a face (25) of substantially radial orientation associated with the carrier (14), and which forms the back of the slider (22); a first, lower, axial, guide wing (26) extending transversally from a lower end axial edge (28) of the core (24) to a free transverse axial edge (41);
the first, lower guide wing (26) comprising an axial rib (44) which is arranged close to the free edge (41); the axial rib (44) being formed by an axial fold which extends radially upwards and which comprises an axial ridge (45) that is substantially rounded which applies a constant elastic pinching force (F1) so as to radially pinch the guide ear (20) against a contact zone of a second guide face (38) of the slider (22)
a second, upper, axial, guide wing (30) extending transversally from an upper end axial edge (32) of the core (24) to a transverse end axial edge (48);
**characterized in that** the axial ridge (45) of the rib (44) of the first lower guide wing (26) is made in a manner that is inclined radially relative to the axial direction of sliding of the pad (16R) so that the total pinching force (Ftot) applied by the guide wing (26) on the ear (20) has a component (F1a) directed rearwards.

2. Disk brake (10) according to the preceding claim, **characterized in that** the contact zone of the second guide face (38) is parallel to the direction of axial sliding of the brake pad (16R, 16F).

3. Disk brake (10) according to the preceding claims, **characterized in that** the contact zone of the first lower guide wing (26) is formed by the axial ridge (45) of the rib (44) which is inclined radially relative to the axial direction.

4. Disk brake (10) according to any one of the preceding claims, **characterized in that** the brake pad (16F) is slidingly mounted in the fixed carrier (14), and **in that** the clamping element consists of a piston (64) which slides axially relative to the carrier (14).

5. Disk brake (10) according to any one of the preceding claims, **characterized in that** the brake pad (16R) is slidingly mounted in a fixed carrier (14) and **in that** the calliper (50) is mounted so as to slide axially on the carrier (14), the brake pad (16R) being arranged facing one calliper nose (56).

## Patentansprüche

1. Scheibenbremse (10) eines Kraftfahrzeugs von der Art, bei der mindestens eine von einer Blattfeder geformte Gleitschiene (22) durch Befestigungseinrichtungen (46), die von einem freien Rand (48) getragen werden, mittels Ineinanderfügung von komplementären Formen an einem Gabelkopf (14) befestigt ist; wobei die Scheibenbremse Folgendes aufweist:
- mindestens einen Bremsbelagträger (16R, 16F), der bezüglich einer Bremsscheibe (12) gemäß einer Gleitachse axialer Ausrichtung in mindestens einer Gleitschiene (22) zwischen einer vorderen Bremsstellung, in der eine Reibungsseite (17R, 17F) des Bremsbelagträgers (16R, 16F) gegen eine Rückseite (19R, 19F) der Scheibe (12) eingespannt sein kann, und einer hinteren Ruhestellung gleitend montiert ist, in der die Reibungsseite (17R, 17F) des Bremsbelagträgers (16R, 16F) von der Rückseite (19R, 19F) der Scheibe (12) entfernt ist;
- einen Bügel (50), der mindestens ein Einspannelement (56, 64) des Bremsbelagträgers (16R, 16F) aufweist, das den Bremsbelagträger (16R, 16F) axial in seine Bremsstellung beaufschlagen kann;
wobei die mindestens eine Gleitschiene Folgendes aufweist:
einen Mittelteil (24) mit im Wesentlichen radialer Ausrichtung, der dazu bestimmt ist, in der Nähe einer Seite mit im Wesentlichen radialer Ausrichtung (25) angeordnet zu sein, die dem Gabelkopf (14) zugeordnet ist; und der den Boden der Gleitschiene (22) formt; einen ersten unteren axialen Führungsschenkel (26), der sich quer von einem unteren Endrad (28) des Mittelteils (24) bis zu einem freien axialen Querendrand (41) erstreckt;
wobei der erste untere Führungsschenkel (26) eine axiale Rippe (44) aufweist, die in der Nähe des freien Rands (41) angeordnet ist; wobei die axiale Rippe (44) von einer axialen Faltung geformt wird, die sich radial nach oben erstreckt und die eine im Wesentlichen abgerundete axiale Kante (45) aufweist, die eine konstante elastische Klemmkraft (F1) ausübt, um den Führungslappen (20) radial gegen eine Kontaktzone einer zweiten Führungsseite (38) der Gleitschiene (22) zu klemmen;
einen zweiten oberen axialen Führungsschenkel (30), der sich quer von einem oberen axialen Endrand (32) des Mittelteils (24) bis zu einem axialen Querendrand (48) erstreckt;
**dadurch gekennzeichnet, dass** die axiale Kante (45) der Rippe (44) des ersten unteren Führungsschenkels (26) bezüglich der axialen Gleitrichtung des Belagträgers (16R) radial geneigt hergestellt ist, damit die vom Führungsschenkel (26) auf den Lappen (20) ausgeübte Gesamtklemmkraft (Ftot) eine nach hinten gerichtete Komponente (F1a) hat.

2. Scheibenbremse (10) nach dem vorhergehenden Anspruch, **dadurch gekennzeichnet, dass** die Kontaktzone der zweiten Führungsseite (38) parallel zur axialen Gleitrichtung des Bremsbelagträgers (16R, 16F) ist.

3. Scheibenbremse (10) nach dem vorhergehenden Anspruch, **dadurch gekennzeichnet, dass** die Kontaktzone des ersten unteren Führungsschenkels (26) von der axialen Kante (45) der Rippe (44) geformt wird, die bezüglich der axialen Richtung radial geneigt ist.

4. Scheibenbremse (10) nach einem der vorhergehenden Ansprüche, **dadurch gekennzeichnet, dass** der Bremsbelagträger (16F) gleitend in den festen Gabelkopf (14) montiert ist und dass das Einspannelement aus einem Kolben (64) besteht, der axial bezüglich des Gabelkopfs (14) gleitet.

5. Scheibenbremse (10) nach einem der vorhergehenden Ansprüche, **dadurch gekennzeichnet, dass** der Bremsbelagträger (16R) gleitend in einen festen Gabelkopf (14) montiert ist und dass der Bügel (50) axial gleitend auf den Gabelkopf (14) montiert ist, wobei der Bremsbelagträger (16R) gegenüber einem Bügelvorsprung (56) angeordnet ist.
